# EUROPÄISCHE PATENTSCHRIFT

(11) **EP 1 074 528 B1**
(45) Veröffentlichungstag und Bekanntmachung des Hinweises auf die Patenterteilung: **12.01.2005**
(21) Anmeldenummer: 00116080.3
(22) Anmeldetag: 27.07.2000
(51) Int. Cl.: C04B 24/22

(54) **Verwendung von Dispersionspulvern, enhaltend wasserlösliche Salze sulfonierter Formaldehyd-Kondensationsprodukte, in hydraulisch abbindenden Massen**
Use of dispersion powders, comprising water soluble salts of sulphonated formaldehyde condensation products, in hydraulically setting masses
Utilisation des poudres de dispersion, contenant de sels hydrosolubles de produits de condensation de formaldéhyde sulfonés, dans des masses à durcissement hydraulique

(30) Priorität: 04.08.1999 DE 19936810
(43) Veröffentlichungstag der Anmeldung: 07.02.2001
(73) Patentinhaber: Celanese Emulsions GmbH, 61476 Kronberg/Ts. (DE)
(72) Erfinder: Geissler, Ulrich, Dr., 65239 Hochheim (DE); Schottler, Michael, 65474 Bischofsheim (DE)
(74) Vertreter: Ackermann, Joachim, Dr., Patentanwalt Dr. Ackermann

(56) Entgegenhaltungen:
- EP-A- 0 407 889
- DE-A- 19 543 304
- DE-A- 19 629 525
- US-A- 4 725 665
- CHEMICAL ABSTRACTS, vol. 102, no. 4, 28. Januar 1985 (1985-01-28) Columbus, Ohio, US; abstract no. 30985s, XP000184277 & JP 59 146960 A (HOECHST GOSEI CO.,LTD.) 23. August 1984 (1984-08-23)

## Beschreibung

Die vorliegende Erfindung betrifft die Verwendung gemäß Anspruch 1 von Dispersionspulvern, enthaltend wasserlösliche Salze sulfonierter Formaldehyd-Kondensationsprodukte, in hydraulisch abbindenden Massen zur Reduktion der Wasseraufnahme derselben.

Dispersionspulver, die sulfonatgruppenhaltige Formaldehyd-Kondensationsprodukte enthalten, sind bekannt.

In der DE-A-20 49 114 wird ein Verfahren zur Herstellung von frei fließenden, blockfesten, in Wasser redispergierbaren Kunststoffpulvern beschrieben, bei dem Kunststoffdispersionen in einem heißen Luftstrom verdüst werden, wobei den Dispersionen vor dem Verdüsen 2 bis 30 Gewichtsprozent, bezogen auf den Feststoffgehalt der Dispersionen, wasserlösliche sulfonatgruppenhaltige Kondensationsprodukte aus Melamin und Formaldehyd zugesetzt werden. Hierdurch soll ein Verkleben der beim Versprühen gebildeten Pulver während des Herstellungsvorgangs verhindert und die Lagerbeständigkeit der Pulver erhöht werden. Weiterhin soll bei Zusatz der Pulver zu hydraulischen Bindemitteln eine Verbesserung der Druck- und Biegezugfestigkeit auftreten.

Die DE-A-24 45 813 beschreibt ein in wässrigen Systemen redispergierbares pulverförmiges Polymeres, das 1 bis 20 Gew.-% eines wasserlöslichen, sulfonsäureoder sulfonatgruppenhaltigen Kondensationsprodukts aus ein- oder mehrkernigen aromatischen Kohlenwasserstoffen und Formaldehyd enthält. Bei diesen Kondensationsprodukten handelt es sich insbesondere um Phenolsulfonsäure- oder Naphthalinsulfonsäure-Formaldehyd-Kondensate. Der Zusatz verhindert wirksam das Verkleben der Kunststoffpulver während des Herstellungsprozesses und erhöht außerdem die Lagerfähigkeit des Produktes. Die Kunststoffpulver sollen als Zusatzmittel für hydraulische Massen beträchtliche Verbesserungen der Druck- und Biegezugfestigkeit dieser Massen bewirken.

Für die Herstellung besonders blockfester, in Wasser redispergierbarer Polymerisat-Pulver wird in der DE-A-31 43 070 empfohlen, 2 bis 40 Gew.-%, bezogen auf das Polymerisat der Dispersion, eines wasserlöslichen Naphthalin-Formaldehyd-Kondensats in Form des Alkali- oder Erdalkalisalzes zuzusetzen. Derartige redispergierbare Polymerisat-Pulver eignen sich z.B. als Zusätze zu hydraulischen Bindemitteln, die verflüssigend wirken und dem abgebundenen Mörtel elastische Eigenschaften verleihen. Nach diesem Verfahren können auch aus Haftkleber-Copolymerisat-Dispersionen rieselfähige Pulver erhalten werden.

Die DE-A-39 23 229 betrifft Polymerisat-Pulver, die einen Zusatz von 3 bis 50 Gew.-%, bezogen auf das Polymerisat, eines wasserlöslichen Alkali- oder Erdalkalisalzes von Phenolsulfonsäure-Formaldehyd-Kondensationsprodukten enthalten. Bei Einsatz dieser Pulver werden Mörtel mit hoher Fließfähigkeit und Flexibilität erhalten. Auch die Biegezug- und Haftfestigkeiten derartiger Mörtel sind höher.

In der DE-A-44 34 010 werden redispergierbare Polymerisatpulver beschrieben, die einen Gehalt von 3 bis 30 Gew.-%, bezogen auf das Gewicht des Polymerisats, an Amino-s-Triazin-Formaldehyd-Sulfit-Kondensationsprodukten und einen geringen freien Formaldehydgehalt aufweisen. Diese Kondensationsprodukte mit einem geringen Gehalt an Formaldehyd stellen äußerst wirksame Schutzkolloide bei der Sprühtrocknung von Polymerdispersionen dar. Dabei wird freier Formaldehyd weder in die Trocknungsabluft emittiert, noch in freier bzw. reversibel gebundener Form in die zu trocknende Polymerdispersion oder das Dispersionspulver eingebracht. Auf diese Weise können Polymerdispersionen vor und nach dem Sprühtrocknen problemlos mit Casein kombiniert werden, ohne daß es zu einer Verschlechterung der Fließeigenschaften des Caseins kommt.

Die DE-A-196 29 525 und die DE-A-196 29 526 beschreiben die Verwendung von Naphthalinsulfonsäure- bzw. Phenolsulfonsäure-Formaldehyd-Kondensationsprodukten als Hilfsmittel bei der Trocknung wäßriger Polymerisatdispersionen.

Überraschend wurde nun gefunden, daß durch Zusatz von Dispersionspulvern, die wasserlösliche Salze sulfonierter Formaldehyd-Kondensationsprodukte enthalten, zu hydraulisch abbindenden Massen, deren Wasseraufnahme deutlich reduziert werden kann.

Bevorzugte sulfonierte Formaldehyd-Kondensationsprodukte sind sulfonierte Melamin-, Naphthalin- und/oder Phenol-Formaldehyd-Kondensationsprodukte. Besonders bevorzugt sind sulfonierte Melamin-Formaldehyd-Kondensationsprodukte.

Als wasserlösliche Salze der sulfonierten Formaldehyd-Kondensationsprodukte werden bevorzugt Alkali- und/oder Erdalkalisalze eingesetzt.

Das Verarbeitungs- und Wasseraufnahmeverhalten der hydraulisch abbindenden Massen läßt sich über den Gehalt an sulfoniertem Formaldehyd-Kondensationsprodukt im Dispersionspulver steuern. Üblicherweise werden 2 bis 30, vorzugsweise 5 bis 20, besonders bevorzugt 8 bis 15, Gewichtsteile an sulfoniertem Formaldehyd-Kondensationsprodukt pro 100 Gewichtsteile des im Dispersionspulver enthaltenen filmbildenden Polymerisates eingesetzt.

Die für die Herstellung der Dispersionspulver notwendigen Dispersionen können in üblicher Weise beispielsweise durch Emulsionspolymerisation olefinisch ungesättigter Monomerer zu filmbildenden Polymerisaten in Gegenwart von Polymerisationsinitiatoren, Emulgatoren und/oder Schutzkolloiden, sowie gegebenenfalls Reglern und anderen Additiven bei erhöhten Temperaturen hergestellt werden. Bei den filmbildenden Polymerisaten kann es sich um Homo- und/oder Copolymerisate handeln. Als olefinisch ungesättigte Monomere werden bevorzugt Vinylacetat, Vinylpropionat, Vinylpivalat, Vinylester von Versatic-Säure (α, α-Dialkyl-verzweigte Carbonsäuren), Vinyl-2-ethylhexanoat, Ester der Acrylsäure oder Methacrylsäure mit geradkettigen, verzweigten oder cyclischen Alkoholen mit 1 bis 22 Kohlenstoffatomen, Styrol und/oder Ethylen eingesetzt. Für die erfindungsgemäße Verwendung werden als filmbildende Polymerisate besonders bevorzugt Copolymerisate aus Vinylacetat und Versaticsäure-10-vinylester eingesetzt. Die Polymerisate haben im allgemeinen Glastemperaturen zwischen + 50 und -50 °C.

Die Herstellung der Dispersionspulver kann nach allen dem Fachmann bekannten Verfahren durchgeführt werden. Bevorzugt ist jedoch die Sprühtrocknung. Das Versprühen der Dispersionen erfolgt dabei beispielsweise mittels Düsen- oder Scheibenzerstäubern bei Temperaturen von 100 bis 200°C, vorzugsweise bei 120 bis 150°C.

Die wasserlöslichen Salze der sulfonierten Formaldehyd-Kondensationsprodukte werden vorzugsweise vor dem Versprühen den Dispersionen zugesetzt. Zusätzlich können noch andere Zusatzstoffe, wie z.B. Polyvinylalkohol und/oder Polyvinylpyrrolidon zugesetzt werden.

Während dem Versprühen der Dispersionen werden in der Regel anorganische Antibackmittel, wie Quarz, Kieselsäuren, Silikate, wie beispielsweise Talk, Glimmer, Chlorit und Aluminiumsilikat, Carbonate, wie beispielsweise Dolomit und Calciumcarbonat, oder Gemische derselben, zugesetzt.

Die mit wasserlöslichen Salzen sulfonierter Formaldehyd-Kondensationsprodukte modifizierten Dispersionspulver werden in hydraulisch abbindenden Massen, bei denen es sich vorzugsweise um Trockenmörtel, wie z.B. Fliesenkleber, Wärmedämmverbundklebemassen, Spachtelmassen, Edelputze, Fugenmassen, Reparaturmörtel und Dichtungsschlämmen, handelt, eingesetzt, wodurch die Wasseraufnahme dieser Systeme deutlich reduziert wird.

Die folgenden Beispiele dienen der näheren Erläuterung der Erfindung, ohne sie einzuschränken. Die angegebenen Teile und Prozente beziehen sich auf das Gewicht, soweit nicht anders vermerkt.

### Beispiel 1:

### A) Herstellung der Dispersionspulver

Zu 1300 Teilen einer mit Polyvinylalkohol stabilisierten Dispersion auf Basis Vinylacetat, Versaticsäure-10-vinylester (70:30), Feststoffgehalt: 50,4%, Viskosität (Haake VT 500, 386,6 s⁻¹): 1000 mPas, T_{g}: 26°C, Partikelgrößenverteilung: d_{w}: 1150 nm, d_{w}/dₙ: 6,5 werden 57,7 Teilen Dipropylenglykoldibenzoat (Benzoflex 9-88, Krahn Chemie GmbH) zugesetzt.

Anschließend werden verschiedene Mengen des Natriumsalzes eines sulfonierten Melamin-Formaldehyd-Kondensationsprodukts (Peramin® SMF 10 der Fa. Perstorp), das in Form einer 40% igen wässrigen Lösung vorliegt, zugegeben. Die so erhaltenen, den Beispielen 1 a bis 1 d entsprechenden Abmischungen, weisen den in Tabelle 1 aufgeführten Gehalt an sulfoniertem Melamin-Formaldehyd-Kondensationsprodukt auf.

**Tabelle 1**

| Gehalt an sulfoniertem Melamin-Formaldehyd-Kondensationsprodukt der in Beispiel 1 hergestellten Abmischungen | | |
|---|---|---|
| Beispiel Nr. | Teile Kondensationsprodukt (40 %ige Lösung) | Teile Kondensationsprodukt pro 100 Teile Polymer |
| 1a | 0 | 0 |
| 1b | 163,8 | 10 |
| 1c | 180,2 | 11 |
| 1d | 196,6 | 12 |

Die Abmischungen entsprechend Beispiel 1a bis 1d werden mit entionisiertem Wasser auf einen Feststoffgehalt von 40% verdünnt und unter Zugabe eines Antibackmittelgemisches aus Talk und Dolomit sprühgetrocknet (Sprühtrockner der Fa. Niro, Eingangstemperatur: 130°C, Ausgangstemperatur: 65°C, Durchsatz: 1 kg Dispersion/Stunde). Der Antibackmittelgehalt beträgt 15%.

Die isolierten Dispersionspulver entsprechend Beispiel 1a bis 1d werden dann in hydraulisch abbindenden Massen eingesetzt und es werden die Wasseraufnahmen und die Ausbreitmaße bestimmt.

### B) Bestimmung der Wasseraufnahme hydraulisch abbindender Massen

Es wird ein Premix hergestellt aus:

| | |
|---|---|
| 0,4 | Teilen Tylose® MHB 30000 YP |
| 80 | Teilen Weißzement |
| 60 | Teilen Quarzsand F 34 |
| 11,6 | Teilen Omyacarb® 130 - BG |
| 29,2 | Teilen Calcilith 0,1 - 0,5 |
| 8,8 | Teilen Calcilith 0,5 - 1,0 |

der in einem Mischer der Fa. Lödige (Typ M5R) 3 Minuten bei 8,5 Skalenteilen homogenisiert wird.
190 Teile Premix werden mit 10 Teilen Dispersionspulver entsprechend den Beispielen 1a bis1d aus Tabelle 1 abgemischt und nach Zugabe von 40 Teilen Wasser 15 Sekunden unter einem Lenartrührer (Fa. Vollrath, Typ EWTHV-1) mit hoher Umdrehungszahl gerührt. Man läßt die Masse 5 Minuten reifen und rührt dann nochmals per Hand durch.
Auf eine 2 cm dicke EPS-Platte wird eine Schablone mit den Abmessungen 0,5 x 10 x 20 cm gelegt. Die Masse wird gleichmäßig eingefüllt und glattgezogen.
Man läßt über Nacht stehen, schneidet dann die Probekörper aus und dichtet den Rand mit geschmolzenem Paraffin ab.
Die abgedichteten Probekörper werden bei 23°C zunächst 3 Tage bei gesättigter Wasserdampfatmosphäre und anschließend 3 Tage bei 50% rel. Luftfeuchte gelagert.

Danach werden die Probekörper gewogen und anschließend mit der Prüffläche nach unten in ein mit Wasser gefülltes Becken gelegt. Nach 1 bzw. 24 Std. werden die Probekörper herausgenommen, mit einem Schwammtuch trockengetupft und gewogen. Die Massenzunahme wird auf g/m² umgerechnet. Die für die Beispiele 1a bis 1d gefundenen Werte der Wasseraufnahme sind in Tabelle 2 aufgeführt.

### C) Bestimmung des Ausbreitmaßes und des Luftgehaltes hydraulisch abbindender Massen

500 Teile Portlandzement CEM I 32,5 R werden mit 500 Teilen Normsand I, fein, 1000 Teilen Normsand II, grob und je 50 Teilen Dispersionspulver entsprechend den Beispielen 1a bis 1d aus Tabelle 1 gemischt und anschließend mit 250 Teilen Wasser angerührt (Mörtelmischer 1 Minute langsam + 1 Minute schnell + 1 Minute langsam). Nach Fertigstellung des dispersionspulverhaltigen Zementmörtels werden Ausbreitmaß und Luftgehalt nach DIN 18 555 Teil 2 bestimmt. Die so für die Beispiele 1a bis 1d gefundenen Ausbreitmaße und Luftgehalte sind ebenfalls in Tabelle 2 aufgeführt.

**Tabelle 2**

| Wasseraufnahmen, Ausbreitmaße und Luftgehalte der in Beispiel 1 hergestellten hydraulisch abbindenden Massen | | | |
|---|---|---|---|
| Beispiel Nr. | Wasseraufnahme (g/m²) 1 Std./24 Std. | Ausbreitmaß (cm) | Luftgehalt (Vol.%) |
| 1a | 593/999 | 18,2 | 23 |
| 1b | 227/500 | 17,7 | 20 |
| 1c | 181/457 | 18,2 | 22 |
| 1d | 141/434 | 18,4 | 25 |

Man erkennt deutlich die Abnahme der Wasseraufnahme mit steigendem Gehalt an sulfoniertem Melamin-Formaldehyd-Kondensationsprodukt.

### Beispiel 2:

### A) Herstellung der Dispersionspulver

- 1300 Teile: einer mit Polyvinylalkohol stabilisierten Dispersion auf Basis Methylmethacrylat und Butylacrylat (35:65), Feststoffgehalt: 50,8%, Viskosität (Haake VT 500, 386,6 s⁻¹): 798 mPas, Tg: -5°C, Partikelgrößenverteilung: d_{w}: 745 nm, d_{w}/dₙ: 3,2
werden mit
- 132 Teilen: einer 25%igen Polyvinylalkohollösung (Viskosität der 4 %igen wäßrigen Lösung bei 20°C: 4 mPas, Verseifungsgrad: 88%, Polymerisationsgrad: 630)
abgemischt.

Anschließend werden die in Tabelle 3 angegebenen Mengen des Natriumsalzes eines sulfonierten Melamin-Formaldehyd-Kondensationsprodukts (Peramin® SMF 10 der Fa. Perstorp) in Form einer 40 %igen Lösung zugegeben.

**Tabelle 3**

| Gehalt an sulfoniertem Melamin-Formaldehyd-Kondensationsprodukt der in Beispiel 2 hergestellten Dispersionen | | |
|---|---|---|
| Beispiel Nr. | Teile Kondensationsprodukt (40 %ige Lösung) | Teile Kondensationsprodukt pro 100 Teile Polymer |
| 2a | 0 | 0 |
| 2b | 82,6 | 5 |
| 2c | 181,6 | 11 |
| 2d | 231,1 | 14 |
| 2e | 264,2 | 16 |

Die Abmischungen werden mit entionisiertem Wasser auf einen Feststoffgehalt von 40 % verdünnt und wie in Beispiel 1 beschrieben sprühgetrocknet.

Unter Verwendung der durch Sprühtrocknung der Abmischungen 2a bis 2e isolierten Dispersionspulver werden die Wasseraufnahmen bzw. die Ausbreitmaße und Luftgehalte von entsprechend Beispiel 1 B) bzw. C) hergestellten hydraulischen Massen bestimmt. Die Ergebnisse sind der Tabelle 4 zu entnehmen.

**Tabelle 4**

| Wasseraufnahmen, Ausbreitmaße und Luftgehalte der in Beispiel 2 hergestellten hydraulisch abbindenden Massen | | | |
|---|---|---|---|
| Beispiel Nr. | Wasseraufnahme (g/m²) 1 Std./24 Std. | Ausbreitmaß (cm) | Luftgehalt (Vol.%) |
| 2a | 450/720 | 18,2 | 33 |
| 2b | 202/453 | 16,1 | 28 |
| 2c | 142/349 | 17,0 | 31 |
| 2d | 115/322 | 18,4 | 29 |
| 2e | 102/306 | 19,6 | 30 |

Auch dieses Beispiel zeigt, daß durch Zusatz eines sulfonierten Melamin-Formaldehyd-Kondensationsprodukts die Wasseraufnahme signifikant reduziert wird.

Außerdem wird ersichtlich, daß bei einer Zusatzmenge von ≤ 11 Gewichtsteilen Kondensationsprodukt pro 100 Gewichtsteile Polymer die Ausbreitmaße kleiner als der Nullwert sind, während mit größeren Zusatzmengen höhere Ausbreitmaße erzielt werden. Somit kann das Verarbeitungsverhalten der hydraulisch abbindenden Massen über die eingesetzte Menge an sulfoniertem Melamin-Formaldehyd-Kondensationsprodukt optimal eingestellt werden. Bezüglich des Luftgehaltes werden keine signifikanten Unterschiede gefunden.

### Beispiel 3:

### A) Herstellung der Dispersionspulver

- 2600 Teile: einer mit Polyvinylalkohol stabilisierten Dispersion auf Basis Vinylacetat, Versaticsäure-10-vinylester und Butylacrylat (45:45:10), Feststoffgehalt: 54,1%, Viskosität (Haake VT 500, 386,6 s⁻¹): 1150 mPas, T_{g}: 13°C, Partikelgrößenverteilung: d_{w}: 1863 nm, d_{w}/dₙ: 12,8
werden mit
- 280 Teilen: einer 25%igen Polyvinylalkohollösung (Viskosität der 4%igen wäßrigen Lösung bei 20°C: 4 mPas, Verseifungsgrad: 88%, Polymerisationsgrad: 630)
versetzt.

Die Hälfte dieser Abmischung wird nach Verdünnung mit entionisiertem Wasser auf einen Feststoffgehalt von 40%, wie in Bsp. 1 beschrieben, sprühgetrocknet (3a). Zur anderen Hälfte werden vor der Versprühung noch 175,8 Teile einer 40%igen Lösung des in Beispiel 1 eingesetzten Natriumsalzes eines sulfonierten Melamin-Formaldehyd-Kondensationsprodukts hinzugefügt, was einem Anteil von 10 Teilen pro 100 Teile Polymer entspricht (3b).

Entsprechend Beispiel 1 B) werden mit Hilfe der Pulver 3a und 3b Probekörper zur Bestimmung der Wasseraufnahme hergestellt. Die Ergebnisse der Wasseraufnahmen sind in Tabelle 5 zusammengestellt.

**Tabelle 5**

| Wasseraufnahmen der in Beispiel 3 hergestellten hydraulisch abbindenden Massen | |
|---|---|
| Beispiel Nr. | Wasseraufnahme (g/m²) 1 Std./24 Std. |
| 3a | 219/561 |
| 3b | 164/418 |

Auch in diesem Fall wird die Wasseraufnahme durch Zusatz des Kondensationsproduktes reduziert.

## Patentansprüche

1. Verwendung von Dispersionspulvern, enthaltend wasserlösliche Salze sulfonierter Formaldehyd-Kondensationsprodukte, in hydraulisch abbindenden Massen zur Reduktion der Wasseraufnahme der hydraulisch abbindenden Massen, wobei das Dispersionspulver 2 bis 30 Gewichtsteile an sulfoniertem Formaldehyd-Kondensationsprodukt, bezogen auf 100 Gewichtsteile des filmbildenden Polymerisates, enthält.

2. Verwendung nach Anspruch 1, **dadurch gekennzeichnet, daß** es sich bei den sulfonierten Formaldehyd-Kondensationsprodukten um sulfonierte Melamin-, Naphthalin- und/oder Phenol-Formaldehyd-Kondensationsprodukte handelt.

3. Verwendung nach Anspruch 1 oder 2, **dadurch gekennzeichnet, daß** es sich bei den sulfonierten Formaldehyd-Kondensationsprodukten um sulfonierte Melamin-Formaldehyd-Kondensationsprodukte handelt.

4. Verwendung nach mindestens einem der Ansprüche 1 bis 3, **dadurch gekennzeichnet, daß** es sich bei den wasserlöslichen Salzen der sulfonierten Formaldehyd-Kondensationsprodukte um Alkali- und/oder Erdalkalisalze handelt.

5. Verwendung nach mindestens einem der Ansprüche 1 bis 4, **dadurch gekennzeichnet, daß** das Dispersionspulver 5 bis 20 Gewichtsteile an sulfoniertem Formaldehyd-Kondensationsprodukt, bezogen auf 100 Gewichtsteile des filmbildenden Polymerisates, enthält.

6. Verwendung nach mindestens einem der Ansprüche 1 bis 5, **dadurch gekennzeichnet, daß** es sich bei den filmbildenden Polymerisaten um Homo- und/oder Copolymerisate olefinisch ungesättigter Monomerer handelt.

7. Verwendung nach Anspruch 6, **dadurch gekennzeichnet, daß** es sich bei den olefinisch ungesättigten Monomeren um Vinylacetat, Vinylpropionat, Vinylpivalat, Vinylester von Versatic-Säure (α, α-Dialkyl-verzweigte Carbonsäuren), Vinyl-2-ethylhexanoat, Ester der Acrylsäure oder Methacrylsäure mit geradkettigen, verzweigten oder cyclischen Alkoholen mit 1 bis 22 Kohlenstoffatomen, Styrol und/oder Ethylen handelt.

8. Verwendung nach Anspruch 6, **dadurch gekennzeichnet, daß** das im Dispersionspulver enthaltene filmbildende Polymere ein Copolymerisat aus Vinylacetat und Versaticsäure-10-vinylester ist.

9. Verwendung nach mindestens einem der Ansprüche 1 bis 8, **dadurch gekennzeichnet, daß** es sich bei den hydraulisch abbindenden Massen um Trockenmörtel handelt.

10. Verwendung nach Anspruch 9, **dadurch gekennzeichnet, daß** es sich bei dem Trockenmörtel um Fliesenkleber, Wärmedämmverbundklebemassen, Spachtelmassen, Edelputze, Fugenmassen, Reparaturmörtel oder Dichtungsschlämmen handelt.

## Claims

1. The use, in hydraulically setting compositions, of dispersion powders comprising water-soluble salts of sulfonated condensation products of formaldehyde, for reducing the water absorption of the hydraulically setting compositions, wherein the dispersion powder comprises from 2 to 30 parts by weight of sulfonated condensation product of formaldehyde, based on 100 parts by weight of the film-forming polymer.

2. The use as claimed in claim 1, wherein the sulfonated condensation products of formaldehyde are sulfonated melamine-, naphthalene and/or phenol-formaldehyde condensation products.

3. The use as claimed in claim 1 or 2, wherein the sulfonated condensation products of formaldehyde are sulfonated melamine-formaldehyde condensation products.

4. The use as claimed in one or more of claims 1 to 3, wherein the water-soluble salts of the sulfonated condensation products of formaldehyde are alkali metal salts and/or alkaline earth metal salts.

5. The use as claimed in one or more of claims 1 to 4, wherein the dispersion - powder comprises from 5 to 20 parts by weight of sulfonated condensation product of formaldehyde, based on 100 parts by weight of the film-forming polymer.

6. The use as claimed in one or more of claims 1 to 5, wherein the film-forming polymers are homo- and/or copolymers of olefinically unsaturated monomers.

7. The use as claimed in claim 6, wherein the olefinically unsaturated monomers are vinyl acetate, vinyl propionate, vinyl pivalate, vinyl esters of versatic acid (α,α-dialkyl-branched carboxylic acids), vinyl 2-ethylhexanoate, esters of acrylic acid or methacrylic acid with straight-chain, branched or cyclic alcohols having from 1 to 22 carbon atoms, styrene and/or ethylene.

8. The use as claimed in claim 6, wherein the film-forming polymer present in the dispersion powder is a copolymer made from vinyl acetate and vinyl 10-versatate.

9. The use as claimed in one or more of claims 1 to 8, wherein the hydraulically setting compositions are dry mortars.

10. The use as claimed in claim 9, wherein the dry mortars are tile adhesives, adhesive compositions for thermally insulating composites, troweling compounds, finishing renders, jointing mortars, repair mortars or sealing slurries.

## Revendications

1. Utilisation de poudres en dispersion, contenant des sels solubles dans l'eau de produits de condensation sulfonés du formaldéhyde, dans des masses pouvant subir une prise hydraulique, pour la réduction de l'absorption d'eau des masses pouvant subir une prise hydraulique, la poudre en dispersion contenant de 2 à 30 parties en poids du produit de condensation sulfoné du formaldéhyde, pour 100 parties en poids du polymère filmogène.

2. Utilisation selon la revendication 1, **caractérisée en ce que**, en ce qui concerne les produits de condensation sulfonés du formaldéhyde, il s'agit de produits de condensation sulfonés mélamine-, naphtalène-et/ou phénol-formaldéhyde.

3. Utilisation selon la revendication 1 ou 2, **caractérisée en ce que**, en ce qui concerne les produits de condensation sulfonés du formaldéhyde, il s'agit de produits de condensation sulfonés mélamine-formaldéhyde.

4. Utilisation selon au moins l'une des revendications 1 à 3, **caractérisée en ce que**, en ce qui concerne les sels solubles dans l'eau des produits de condensation sulfonés du formaldéhyde, il s'agit des sels de métaux alcalins et/ou alcalino-terreux.

5. Utilisation selon au moins l'une des revendications 1 à 4, **caractérisée en ce que** la poudre en dispersion contient de 5 à 20 parties en poids du produit de condensation sulfoné du formaldéhyde, pour 100 parties en poids du polymère filmogène.

6. Utilisation selon au moins l'une des revendications 1 à 5, **caractérisée en ce que**, en ce qui concerne les polymères filmogènes, il s'agit d'homo-et/ou de copolymères de monomères à insaturation oléfinique.

7. Utilisation selon la revendication 6, **caractérisée en ce que**, en ce qui concerne les monomères à insaturation oléfinique, il s'agit de l'acétate de vinyle, du propionate de vinyle, du pivalate de vinyle, de l'ester vinylique de l'acide Versatic (acides carboxyliques à ramification α,α-dialkyle), du 2-éthylhexanoate de vinyle, des esters de l'acide acrylique ou de l'acide méthacrylique et d'alcools à chaîne droite ou ramifiée, ou cyclique, ayant de 1 à 22 atomes de carbone, du styrène et/ou de l'éthylène.

8. Utilisation selon la revendication 6, **caractérisée en ce que** le polymère filmogène contenu dans la poudre en dispersion est un copolymère d'acétate de vinyle et de l'ester 10-vinylique de l'acide Versatic.

9. Utilisation selon au moins l'une des revendications 1 à 8, **caractérisée en ce que**, en ce qui concerne les masses pouvant subir une prise hydraulique, il s'agit de mortier sec prêt à l'emploi.

10. Utilisation selon la revendication 9, **caractérisée en ce que**, en ce qui concerne le mortier sec prêt à l'emploi, il s'agit de colles pour carrelages, de masses adhésives composites pour calorifugeage, de produits de rebouchage, d'enduits garnissants, de masses de jointoiement, de mortiers de réparation ou de coulis d'étanchéité.
